# EUROPÄISCHE PATENTSCHRIFT

(11) **EP 1 039 766 B1**
(45) Veröffentlichungstag und Bekanntmachung des Hinweises auf die Patenterteilung: **23.01.2008**
(21) Anmeldenummer: 00104944.4
(22) Anmeldetag: 08.03.2000
(51) Int. Cl.: H04Q 7/08

(54) **Verfahren, Zentrale und Endgerät zur Übertragung von Mitteilungen an Endgeräte in einem Telekommunikationssystem**
Method, exchange and terminal for transmission of messages to terminals in a telecommunication system
Procédé, centrale et terminal pour la transmission de messages vers terminaux dans un système de télécommunication

(30) Priorität: 19.03.1999 DE 19912547
(43) Veröffentlichungstag der Anmeldung: 27.09.2000
(73) Patentinhaber: ROBERT BOSCH GMBH, 70442 Stuttgart (DE)
(72) Erfinder: Vollmer, Vasco, 29471 Gartow (DE); Radimirsch, Markus, 30880 Laatzen (DE)

(56) Entgegenhaltungen:
- EP-A- 0 428 126
- EP-A- 0 642 287
- US-A- 5 604 744
- US-A- 5 745 860

## Beschreibung

### Stand der Technik

Die vorliegende Erfindung bezieht sich auf ein Kommunikationssystemzur Übertragung von Mitteilungen an Endgeräte sowie um eine Anordnung zur Ausführung des Verfahrens. Ein solches Verfahren wie auch ein System zur Ausführung ist aus der US-A-5 745 860 bekannt. Dort werden mehrere Terminals oder Endgeräte von einer zentralen Station oder Zentrale aus bedient. Es werden Endgerätegruppen aus einer Mehrzahl von Endgeräten gebildet, wobei diesen Gruppen mitgeteilt wird, wann sie in den Schlafzustand übergehen können. Die Zentrale überträgt Kontrollmitteilungen zu vorbestimmten Zeiten in denen die Endgeräte in den Wachmodus überführt werden. Ähnliche Verfahren bzw. Systeme sind aus EP-A- 0 428 126 oder EP-A-0 642 287 bekannt. Der Austausch von Informationen zwischen Komponenten des Telekommunikationssystems kann mittels eines Protokolls geschehen, das zeitlich in Rahmen strukturiert ist, so dass sowohl der Austausch von Signalisierungsinformationen als auch der Austausch von Nutzinformationen mittels einer Abfolge von, zeitlich vorzugsweise gleichlangen, Rahmen geschieht. Bevor ein Endgerät mit einer Zentrale kommuniziert, ist eine sogenannte Assoziierung des Endgerätes notwendig. Im Laufe einer solchen Assoziierung werden verschiedene Parameter verhandelt.

Der Informationsaustausch zwischen einem Terminal und der Zentrale wird beispielhaft mittels eines Kanalzugriffs-Protokolls organisiert. Das Kanalzugriffs-Protokoll wird auch als "Medium Access Control", abgekürzt MAC, bezeichnet. Im Zusammenhang mit der Assoziierung eines Terminals mit der Zentrale ist es wichtig, dass jedem Terminal eine bestimmte MAC-Adresse zugeteilt wird, über die es eindeutig im Bereich der Zentrale identifiziert wird.

Die Kommunikation zwischen den Komponenten eines Telekommunikationssystems, dass heißt sowohl zwischen der Zentrale und einem Endgerät oder auch zwischen zwei Endgeräten, erfolgt rahmenorientiert, dass heißt erfindungsgemäß mittels MAC-Rahmen einer vorzugsweise festen zeitlichen Dauer. Jeder dieser MAC-Rahmen stellt Übertragungskapazität für die Richtung von den Endgeräten zur Zentrale (Uplink) sowie für die Richtung von der Zentrale zu den Endgeräten (Downlink) zur Verfügung. Weiterhin kann ein MAC-Rahmen ebenso Übertragungskapazität zwischen verschiedenen Endgeräten zur Verfügung stellen (Point to Point). Ein Verfahren zum Durchführen einer solchen rahmenorientierten Übertragung wurde auch in der deutschen Patentanmeldung 19726120.5 vorgeschlagen.

Zur Ermöglichung einer längeren Standzeit insbesondere für tragbare Endgeräte werden insbesondere im GSM (Global System for Mobile Communication) Stromsparverfahren verwendet. Diese Verfahren sind im GSM einfach einzusetzen, da GSM eine leitungsvermittelte Kommunikation bereit stellt. Das heißt, dass es nur die Zustände "verbunden" und "nicht verbunden" gibt. Im Zustand "verbunden" werden kontinuierlich Daten zwischen Netz und Teilnehmer ausgetauscht. Im Zustand "nicht verbunden" muß sich das Endgerät in regelmäßigen Abständen darüber informieren,
welche Basisstation aktuell am besten zu empfangen ist und ob ein Ruf für es ankommt. Einkommende Rufe werden von allen Basisstation in der Roaming Area ausgesandt und das Endgerät meldet sich bei der aktuell besten Basisstation, um den Ruf zu übernehmen. Das Endgerät meldet sich selbst solange nicht, bis es die sogenannte

Roaming Area verläßt. In diesem Fall muß es sich in der neuen Roaming Area anmelden.

Die wichtigsten Merkmale der Stromsparverfahren im Zusammenhang mit der vorliegenden Erfindung sind:
- Die Endgeräte senden den Wunsch, in den Schlafmodus zu gehen an die Zentrale, wobei ein Schlafintervallparameter den Wunsch näher beschreibt.
- Die Zentrale antwortet mit einer Nachricht und bestätigt gegebenenfalls einen geänderten Schlafintervallparameter.
- Die Endgeräte hören gemäß dem vereinbarten Schlafintervallparameter eine gewisse Anzahl von MAC-Rahmen nicht ab, woran sich ein MAC-Rahmen anschließt, der wiederum von den Endgeräten abgehört wird.
- Die Zentrale weiß, wann dies jeweils für die Endgeräte der Fall ist, und kann den Endgeräten in diesem bestimmten MAC-Rahmen eine Meldung zukommen lassen, weitere Meldungen zu beachten. Ist dies nicht der Fall, so begeben sich die Endgeräte wieder in den Schlafmodus.
- Dies wiederholt sich solange, bis entweder das Terminal, das heißt das Endgerät, oder die Zentrale eine Nachricht -zu versenden hat.

Die Zentrale hat zwischen den MAC-Rahmen, in denen das Terminal vereinbarungsgemäß zuhört, keine Möglichkeit, das Terminal zu erreichen. Wenn Sie also eine Nachricht für ein schlafendes Terminal hat, muß sie warten, bis das Terminal wieder bereit ist, Meldungen entgegenzunehmen. Andererseits weiß die Zentrale ganz genau, wann sie ein Terminal wieder erreichen kann.

### Vorteile der Erfindung

Das erfindungsgemäße Verfahren zur Übertragung von Mitteilungen an Endgeräte in einem Telekommunikationssystem mit den Merkmalen des Hauptanspruchs hat demgegenüber den Vorteil, daß die Zentrale die Möglichkeit hat, den Schlafintervall-Parameter zu verändern und den OffsetParameter einzuführen. Aufgrund dieser Tatsache ist es möglich, daß die Zentrale mehrere Terminals, die im Schlafmodus sind, so gruppiert, daß sie in einem bestimmten MAC-Rahmen die Broadcast-Phase abhören. Wenn Terminals verschieden lange Schlafintervalle haben, ist es so auch möglich, diejenigen Terminal mit langen Schlafintervallen mit solchen Terminals, die kurze Schlafintervalle aufweisen, so zusammenzufassen, daß sie in demselben MAC-Rahmen aufwachen.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist, daß jede Endgerätegruppe genau ein Endgerät umfaßt. Dies führt dazu, daß die Zentrale jedes Endgerät im Hinblick auf Broadcast-Meldungen bzw. auf Multicast-Meldungen individuell behandelt und die Definition von Broadcast-Multicast-Gruppen bzw. von Multicast-Multicast-Gruppen wegfällt.
Weiterhin ist von Vorteil, daß den Endgeräten einer Endgerätegruppe von der Zentrale Parameter, vorzugsweise ein Schlafintervallparameter und ein Offsetparameter übergeben werden, so daß alle Endgeräte einer Endgerätegruppe während des gleichen, vorzugsweise periodisch wiederkehrenden Rahmens bereit sind, Mitteilungen der Zentrale zu empfangen. Dadurch kann durch die Zusammenfassung von mehreren Endgeräten zu einer Endgerätegruppe der Verbrauch von Übertragungsressourcen im Telekommmunikationsnetz verringert werden.

Weiterhin ist von Vorteil, daß die Mehrzahl der Endgeräte zu lediglich einer einzigen Endgerätegruppe zusammengefaßt werden und das die zu übertragende Mitteilung somit an die Mehrzahl der Endgeräte während eines einzigen möglichen, vorzugsweise des ersten möglichen, der Rahmen übertragen werden. Dadurch müssen die Broadcast-Meldungen bzw. die Multicast-Meldungen lediglich einmal versendet werden. Alle Terminals empfangen diese dann gleichzeitig. Dadurch wird weiterhin der Verbrauch von Übertragungsressourcen minimiert. Außerdem fällt die Definition von Broadcast-Multicast-Gruppen bzw. von Multicast-Multicast-Gruppen und die Zuordnung der Terminals dazu weg.

Weiterhin ist es von Vorteil, daß die Anzahl der zu bildenden Endgerätegruppe in Abhängigkeit einerseits der Übertragungs- und Verwaltungsressourcen des Telekommunikationssystems und der Zentrale und/oder andererseits der zu erwartenden Übertragungsverzögerung gewählt wird. Dadurch wird ein Kompromiß zwischen dem Verbrauch von Übertragungsressourcen und Verwaltungsressourcen bei der Verwendung von sehr vielen Endgerätegruppen, die jeweils sehr wenige Endgeräte umfassen, und einer Verlängerung der Übertragungszeit, hervorgerufen durch die Berücksichtigung des längsten Schlafintervallparameters eines Endgerätes einer Endgerätegruppe, bewirkt. Ein weiterer Vorteil ist dadurch gegeben, daß die Zentrale in Abhängigkeit beispielsweise der Auslastung des Telekommunikationssystems diesen Kompromiß flexibel handhabt. Bei einer sehr starken Auslastung der Übertragungskapazitäten des Kommunikationssystem kann somit der zusätzliche Ressourcen-Verbrauch durch Broadcast- bzw. Multicast-Meldungen verringert werden, indem eine größere Übertragungsverzögerung in Kauf genommen wird. Umgekehrt wird somit eine schnelle Bearbeitung von Broadcast-bzw. Multicast-Meldungen möglich, wenn beispielsweise deren Bearbeitung in einem engen Zeitraster abzulaufen hat.

Weiterhin ist es von Vorteil, daß die Zuordnung eines Endgerätes zu einer bestimmten Endgerätegruppe dem betreffenden Endgerät von der Zentrale durch die Übergabe einer insbesondere der Endgerätegruppe spezifisch zugeordneten Kennung mitgeteilt wird. Durch eine solche Kennung wird es Endgeräten ermöglicht zu erkennen, ob eine versandte Meldung für sie bestimmt ist oder nicht.

Weiterhin ist es von Vorteil, daß die zu übertragende Mitteilung von der Zentrale in einem Speicher gespeichert wird. Dadurch steht einer eingegangenen Meldung so lange zur Versendung an Endgeräte bereit, bis die Meldung auch an das Endgerät mit dem längsten Schlafintervallparameter weitergereicht wurde bzw. dieses eine positive Rückmeldung gegeben hat.

Weiterhin ist von Vorteil, daß eine Endgerätegruppe lediglich ein einziges Endgerät umfaßt, wobei die zu übertragende Mitteilung dem einzigen Endgerät der einem Endgerätegruppe mittels einer Einzelmeldung übertragen wird. Dadurch wird die Definition einer Endgerätegruppe für ein einziges Endgerät überflüssig, denn ein solches einzelnes Endgerät bekommt die Meldung individuell übermittelt.

Weiterhin ist von Vorteil, daß die zu übertragende Meldung als Broadcast-Meldung oder als Broadcast-Multicast-Meldung behandelt wird, wobei die Mehrzahl von Endgeräten von allen der Zentrale, insbesondere in der Funkzelle eines zellularen Funknetzes, zugeordneten Endgeräte gebildet wird. Dadurch werden alle der Zentrale zugeordneten Endgeräte durch die Meldung erreicht.

Weiterhin ist es von Vorteil, daß die zu übertragende Meldung als Multicast-Meldung oder als Multicast-Multicast-Meldung, die an die Mitglieder einer Multicast-Gruppe übertragen werden soll, behandelt wird, wobei die Mehrzahl von Endgeräten von allen der Zentrale, insbesondere in einer Funkzelle eines zellularen Funknetzes, zugeordneten Endgeräten der Multicast-Gruppe gebildet wird. Dadurch ist es möglich, daß lediglich diejenigen der einer Zentrale zugeordneten Endgeräte von der Meldung erreicht werden, die zu der die Meldung betreffenden Multicast-Gruppe gehören.

Die erfindungsgemäße Zentrale mit den Merkmalen des ersten Vorrichtungsanspruchs hat gegenüber dem Stand der Technik den Vorteil, daß eine Einteilung von Endgeräten in Endgerätegruppen zur Übermittlung von Broadcast-Meldungen bzw. von Multicast-Meldungen durchgeführt wird, wobei die Vorrichtung sehr viele Endgeräte, im Grenzfall alle zu erreichende Endgeräte, für eine die Systemressourcen wendige belastende Übertragung von Meldungen wählt und wobei die Zentrale zur schnelleren Übertragung von Meldungen die zu erreichenden Endgeräte so in Endgerätegruppen zusammenfaßt, daß die Meldungen in möglichst kurzer Zeit, im Grenzfall individuell für jedes Endgerät, verschickt werden.

Durch die im Unteranspruch aufgeführten Maßnahmen ist eine vorteilhaft Weiterbildung und Verbesserung der im Hauptanspruch angegebenen Zentrale möglich. Besonders vorteilhaft ist, daß die Zentrale einen Nachrichtenselektierer umfaßt, der solche Nachrichten, die an mehrere, der Zentrale zugeordnete Endgeräte zu übertragen sind, von solchen Meldungen trennt, die individuell an ein einzelnes der Zentrale zugeordnetes Endgerät zu übertragen sind. Dies hat den Vorteil, daß individuell zu übertragende Nachrichten schneller und einfacher zu bearbeiten sind.

Das erfindungsgemäße Endgerät mit den Merkmalen des zweiten Vorrichtungsanspruchs hat gegenüber dem Stand der Technik den Vorteil, daß ein größerer Schlafintervall-Parameter eines Endgerätes nicht zu einer Kommunikationsverzögerung für andere Endgeräte führt und daß durch die spezifische Zuordnung der Kennung zu einer Endgerätegruppe weiterhin eine einwandfreie Kommunikation möglich ist.

### Zeichnungen

Anhand der Zeichnungen werden Ausführungsbeispiele der Erfindung näher erläutert. Es zeigen
Figur 1 eine Zelle eines Funknetzes mit einer Zentrale und mit Endgeräten,
Figur 2 ein zeitlicher Ausschnitt aus einer Folge von Übertragungsrahmen,
Figur 3 ein erstes Ausführungsbeispiel für die Funktion des erfindungsgemäßen Verfahrens für die Aussendung einer Meldung an mehrere Endgeräte,
Figur 4 ein zweites Ausführungsbeispiel für die Aussendung einer Meldung an mehrere Endgeräte und
Figur 5 ein Blockschaltbild für den die Erfindung betreffenden Teil einer Telekommunikationszentrale.

### Beschreibung der Ausführungsbeispiele

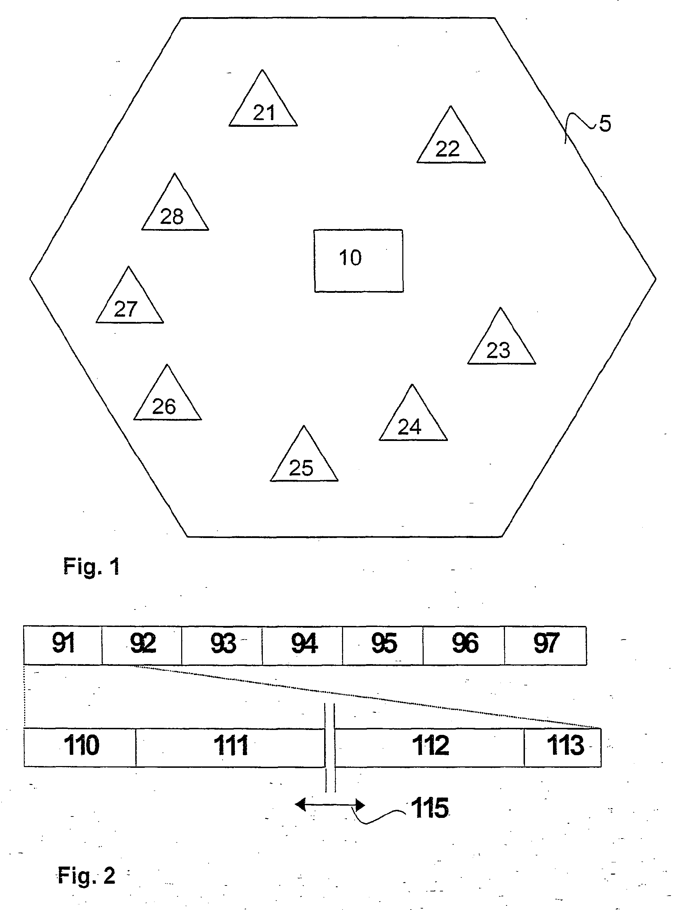

Bevor auf das eigentliche erfindungsgemäße Verfahren eingegangen wird, wird zuvor die in Figur 1 dargestellte Funkzelle und das rahmenorientierte Übertragungsprotokoll anhand einer Folge von in Figur 2 dargestellten Übertragungsrahmen beschrieben.

Die Figur 1 zeigt eine Funkzelle 5 eines Funksystems, beispielsweise eines zellularen Mobilfunksystems. Die Funkzelle 5 legt den Einzugsbereich einer Basisstation 10 fest. Endgeräte, die sich in der Funkzelle 5 befinden, nehmen bevorzugt über die Zentrale 10 an der Kommunikation in dem Telekommunikationssystem teil, da sie zu der Zentrale 10 in der Regel eine bessere Verbindung aufrecht erhalten können als beispielsweise zu einer Zentrale, die für eine benachbarte Zelle zuständig ist. In Figur 1 sind beispielhaft 8 Endgeräte dargestellt, die in der Funkzelle 5 der Zentrale 10 zugeordnet sind. Das erste bis achte Endgerät wird mit den Bezugszeichen 21 bis 28 bezeichnet. Die Endgeräte 21 bis 28 sind über Funkverbindungen mit der Zentrale 10 verbunden. Die Zentrale 10 und die Terminals 21-28 müssen vor einer Kommunikation vereinbaren, welche Verbindungsadresse benutzt werden darf und welchem Zweck die Verbindung dient. Diese Vereinbarung kann explizit durch Verhandlung erfolgen oder standardmäßig aufgrund einer vorherigen Spezifikation vorhanden sein. Eine Verbindung wird beispielsweise durch die Kombination einer MAC-Adresse und einer explizit verhandelten Verbindungskennung gekennzeichnet. Diese Kombination wird im folgenden auch als Nutzverbindungskennung (NVK) bezeichnet.

Mögliche Übertragungsmedien für das erfindungsgemäße Verfahren und die erfindungsgemäßen Vorrichtungen sind ein Funkkanal oder ein passives optisches Netz oder Kabelverteilnetz mit koaxialen Kabeln und/oder Glasfasern. Wichtig ist, daß eines oder mehrere Endgeräte von einer zentralen Station bedient werden, wie beispielhaft in Figur 1 gezeigt. An der Stelle eines Endgerätes 21-28 kann sich auch ein Konzentrator mit mehreren Endgeräten befinden (Nebenstellenanlage in Besitz des Teilnehmers oder Netzwerk-Unit im Besitz des Netzbetreibers). Im folgenden wird ohne Einschränkung der Allgemeinheit von Endgeräten 21-28 oder von Terminals 21-28 gesprochen. Die Zentrale 10 koordiniert die Kommunikation zwischen der Zentrale 10 und den Endgeräten 21 bis 28. Das hier vorwiegend zu betrachtende Medium ist ein Funkkanal. Aufgrund der Ungebundenheit an einen Ort ist es üblich, daß die Endgeräte 21-28 z.B. Notebooks oder andere tragbare Geräte sind, die mit Batterien betrieben werden können. Daher ist der Stromverbrauch ein wichtiges Verkaufsargument für solche Geräte.

In Figur 2 ist eine Abfolge von Übertragungsrahmen 91 bis 97 des verwendeten rahmenorientierten Übertragungsprotokolls in ihrer zeitlichen Abfolge dargestellt. Ein siebter Übertragungsrahmen 97 folgt dabei unmittelbar auf einem sechsten Übertragungsrahmen 96, der wiederum unmittelbar auf einem fünften Übertragungsrahmen 95 folgt und so fort bis zum ersten Übertragungrahmen 91. Die Übertragungsrahmen 91-97 werden im folgenden unterschiedslos auch einfach als Rahmen 91-97 oder als MAC-Rahmen 91-97 bezeichnet. Der erste Übertragungsrahmen 91 ist zur detaillierteren Beschreibung in Figur 2 weiterhin in mehrere Phasen unterteilt, wobei jeder Übertragungsrahmen 91-97 (Medium Access Control-Rahmen) vorzugsweise eine festgelegte zeitliche Dauer aufweist.

Innerhalb dieser festgelegten zeitlichen Dauer eines MAC-Rahmens 91-97 existiert beispielsweise eine Broadcast-Phase 110, eine Downlink-Phase 111, eine Uplink-Phase 112 und eine Random-Access-Phase 113. Zusätzlich zu den aufgeführten Phasen bzw. alternativ zur Uplink-Phase 112 und/oder Downlink-Phase 111 besteht die Möglichkeit, daß ein MAC-Rahmen 91-97 ebenso eine nicht dargestellte Point-to-Point-Phase umfaßt. Die Reihenfolge der einzelnen Phasen innerhalb eines MAC-Rahmens 91-97 ist dabei nicht notwendigerweise fest vorgegeben. Weiterhin ist die zeitliche Ausdehnung der einzelnen Phasen nicht fest vorgegeben, wobei jedoch vorzugsweise jeder MAC-Rahmen 91-97 zeitlich jeweils die gleiche Dauer aufweist. Im beschriebenen Beispiel ist die Broadcast-Phase 110 zu Beginn eines jeden MAC-Rahmens 91-97 aufgeführt. In der Broadcast-Phase 110 sendet die Zentrale 10 Informationen, die für alle Terminals 21-28 relevant sind, zum Beispiel Name und Adresse der Zentrale 10, Ankündigung von Aussendungen in der Downlink-Phase 111 bzw. in der Uplink-Phase 112, die Position der Random-Access-Phase 113 u.s.w.

An die Broadcast-Phase 110 schließt sich im ausgeführten Beispiel die Downlink-Phase 111 an, welche die Zentrale 10 dazu benutzt, an einzelne der Terminals 21-28 Nachrichten bzw. Meldungen zu versenden. Im folgenden werden die Begriffe Meldung, Nachricht und Mitteilung synonym bebraucht. Eine Meldung enthält dabei Signalisierungsinformation und/oder Nutzinformation, beispielsweise Signalisierungsinformation für die Kommunikation eines Endgerätes 21-28, Nutzinformation für den Benutzer eines Endgerätes 21-28 oder dergleichen. Die Broadcast-Phase 110 und die Downlink-Phase 111 zusammen wird auch als erster Teilbereich 110, 111 innerhalb der Rahmen 91-97 bezeichnet. Im ersten Teilbereich 110, 111 sendet die Zentrale 10 Mitteilungen für die Endgeräte 21-28 aus. Der erste Teilbereich 110, 111 muß dabei nicht notwendigerweise zeitlich zusammenhängend ausgebildet sein, sondern kann sich auch in mehreren Phasen über einen MAC-Rahmen verteilen. An die Downlink-Phase 111 schließt sich im ausgeführten Beispiel die Uplink-Phase 112 an, in welcher einzelne Terminals 21-28 Daten an die Zentrale 10 senden. Die Zeitdauer der Downlink-Phase 111 bzw. der Uplink-Phase 112 sind variabel, so daß bei hohem Nachrichtenaufkommen, das von der Zentrale 10 zu den Terminals 21-28 gesendet werden muß, die Downlink-Phase 111 auf Kosten der Uplink-Phase 112 ausgeweitet wird, bzw. daß bei hohem Nachrichtenaufkommen von den Terminals 21-28 zur Zentrale 10 umgekehrt die Uplink-Phase 112 gegenüber der Downlink-Phase 111 vergrößert wird. In der nicht dargestellten Point-to-Point-Phase können die Endgeräte 21-28 auch direkt miteinander kommunizieren, ohne Nachrichten bzw. Meldungen zuerst der Zentrale 10 mitzuteilen. An die Uplink-Phase 112 schließt sich im ausgeführten Beispiel die Random-Access-Phase 113 an, während der beispielsweise solche Terminals 21-28, die keine Übertragungskapazität in der Uplink-Phase 112 zugewiesen bekamen, Nachrichten an die Zentrale 10 senden können. Dabei greifen sie, beispielsweise zur Aufnahme von neuen Verbindungen, wahlfrei (Random Access) zu, so daß es zu Kollisionen kommen kann. Entsprechend dem ersten Teilbereich 110, 111 innerhalb der Rahmen 91-97 wird die Uplink-Phase 112 und die Random-Access-Phase 113 zusammen auch als zweiter Teilbereich 112, 113 innerhalb der Rahmen 91-97 bezeichnet, in dem Mitteilungen von Endgeräten 21- 28 zur Zentrale 10 gesendet werden.

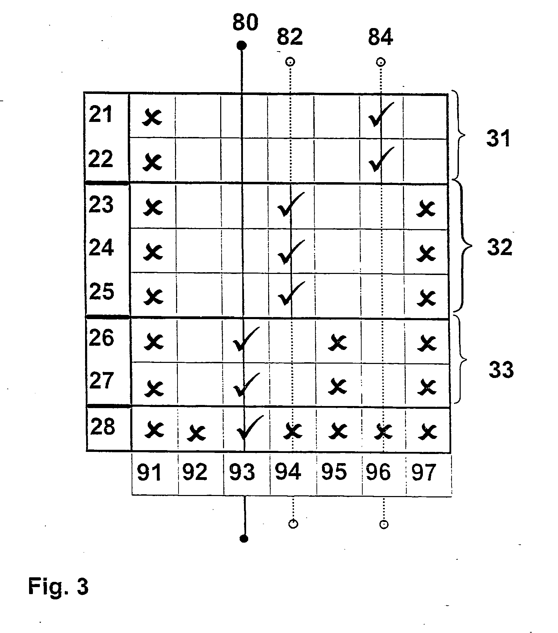

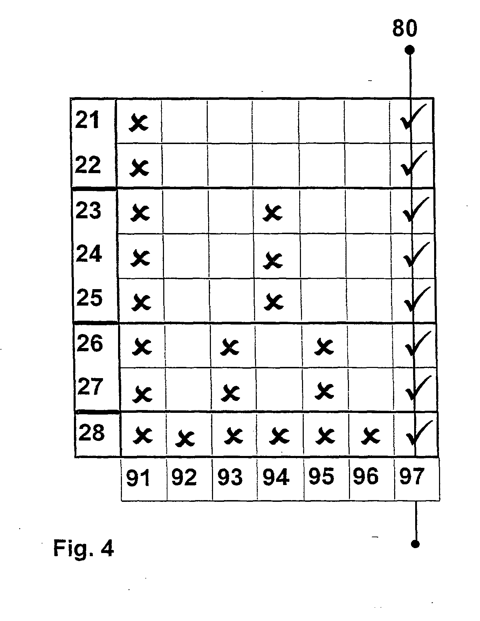

Bevor das erfindungsgemäße Verfahren anhand von Figur 3 und Figur 4 beschrieben wird, soll anhand der folgenden Schritte das Verfahren zum stromsparenden Betrieb von Endgeräten beschrieben werden:
- Die Endgeräte 21-28 entscheiden, wann sie in einen Schlafmodus gehen wollen. Der Schlafmodus eines Endgerätes 21-28 ist dadurch gekennzeichnet, daß das Endgerät 21-28 einen einzelnen oder mehrere aufeinanderfolgende MAC-Rahmen 91-97 ignoriert. Das bedeutet, daß beispielsweise eine Empfangseinheit des Endgerätes 21-28 abgeschaltet bleibt und so eine Stromersparnis möglich ist. Dazu sendet das Endgerät 21-28 eine Nachricht an die Zentrale 10 , wobei in der Nachricht angekündigt wird, daß das Terminal 21-28 schlafen will. Außerdem wird durch die Übergabe eines Schlafintervallparameters die Länge-eines gewünschten Schlafintervalls angegeben, wobei der Schlafintervallparameter eine bestimmte Anzahl von MAC-Rahmen 91-97 als Schlafintervall angibt.
- Die Zentrale 10 antwortet mit einer Nachricht, in der bestätigt wird, daß das Terminal 21-28 schlafen gehen kann. Es wird ein - evtl. gegenüber dem Wunsch verändertes - Schlafintervall und ein Offsetparameter angegeben. Der Offsetparameter gibt an, ab dem wievielten MAC-Rahmen 91-97 das Terminal 10 mit der Zählung für das Schlafintervall beginnen kann. Im folgenden verwenden beide - Zentrale 10 und Terminal 21-28 - den von der Zentrale 10 in der Antwort angegebenen Wert für die Dauer des Schlafintervalls.
- Das Terminal beginnt nun, die MAC-Rahmen 91-97, beginnend mit dem im Offsetparameter angegebenen MAC-Rahmen 91-97, zu zählen. Bei verstrichenem Schlafintervall hört das Terminal 21-28 die Broadcast-Phase 110 innerhalb eines MAC-Rahmens 91-97 ab. In der Broadcast-Phase 110 sendet die Zentrale 10 Meldungen, die relevant für alle Terminals 21-28 sind, z.B. Name und Andresse der Zentrale 10, Ankündigung von Aussendungen in anderen Phasen des MAC-Rahmens 91-97, Position einer Random-Access-Phase 113.
- Die Zentrale 10 weiß, aufgrund des Offsetparameters und aufgrund des Schlafintervallparameters, wann das Terminal 21-28 zuhört. Falls die Zentrale 10 eine Meldung an dieses Terminal 21-28 zu senden hat, sendet sie in der Broadcast-Phase 110 dieses MAC-Rahmens 91-97 ein Aufweck-Signal an das Terminal 21-28. Falls die Zentrale 10 keine Meldung zu senden hat, wird das Terminal 21-28 nicht benachrichtigt.
- Falls das Terminal 21-28 nichts zu empfangen hat, geht es in den Schlafmodus und zählt wieder die MAC-Rahmen 91-97 entsprechend dem Schlafintervall, beginnend bei einem Start-Wert, beispielsweise 0 oder 1. Wenn das Schlafintervall vorüber ist, hört das Endgerät 21-28 wieder die Broadcast-Phase 110 der Zentrale 10 nach einer Benachrichtigung ab.
- Dieser Vorgang wiederholt sich solange, bis entweder das Terminal 21-28 oder die Zentrale 10 eine Nachricht zu versenden hat.

Die Zentrale 10 hat zwischen den MAC-Rahmen 91-97, in denen das Terminal 21-28 vereinbarungsgemäß zuhört, keine Möglichkeit, das Terminal 21-28 zu erreichen. Wenn Sie also eine Nachricht für ein schlafendes Terminal 21-28 hat, muß sie warten, bis das Terminal 21-28 wieder die Broadcast-Phase 110 abhört. Andererseits weiß die Zentrale 10 genau, wann sie ein Terminal 21-28 wieder erreichen kann.

Mittels des Schlafintervallparameters und des Offsetparameters ist es möglich, daß die Zentrale mehrere Terminals 21-28 im Schlafmodus so gruppiert, daß sie in demselben MAC-Rahmen 91-97 die Broadcast-Phase 110 abhören. Wenn Terminals 21-28 verschieden lange Schlafintervalle haben, ist es so auch möglich, diejenigen Terminals 21-28 mit langen Schlafintervallen und solche Terminals 21-28 mit kurzen Schlafintervallen mit Hilfe des SchlafintervallParameters und des Offset-Parameters so zu steuern, daß es MAC-Rahmen 91-97 gibt, in denen alle solchermaßen betrachteten Terminals 21-28 die Broadcast-Phase 110 abhören. Dies ist beispielsweise möglich, wenn das Schlafintervall des einen Terminals 21-28 doppelt so lang ist wie das Schlafintervall des anderen Terminals 21-28.

Die Zentrale 10 muß grundsätzlich sicherstellen, daß alle Endgeräte 21-28 alle Broadcast-Meldungen erhalten und daß Multicast-Meldungen von allen, einer Multicast-Gruppe zugehörenden, Terminals 21-28 empfangen werden. Ein problematischer Fall tritt ein, wenn ein oder mehrere Terminals 21-28 in einer Funkzelle schlafen, das heißt, wenn solche Terminals 21-28 von manchen MAC-Rahmen 91-97 die Broadcast-Phase 110 nicht abhören. In diesem Fall ist es nicht sinnvoll, daß die Zentrale 10 diese Nachricht sofort bei ihrem Empfang einfach versendet, da von vornherein klar ist, daß einige Terminals 21-28 die Nachricht nicht erhalten werden. Weiterhin ist es keine gute Lösung, die Nachricht so lange zu wiederholen, bis sichergestellt ist, daß jedes Terminal 21-28 die Nachricht erhalten hat. In diesem Fall könnte es passieren, daß ein Terminal 21-28 die Broadcast-Meldung mehrere Male erhält und auch mehrere Male eine Antwort darauf verschickt. Dies ist bei einigen Nachrichtentypen unbedingt zu vermeiden und bei andern zumindest unerwünscht, weil es zu unerwünschtem zusätzlichem Verkehr in der Funkzelle 5 und im Netzwerk führen würde.

Die Erfindung verbindet nun das Verfahren zum Stromsparen mit dem intelligenten Versand von Broadcast-Meldungen bzw. Multicast-Meldungen mit Hilfe des MAC-Protokolls. Die Erfindung ist aber nicht auf die Verwendung des MAC-Protokolls beschränkt. Es können sämtliche rahmenstrukturierten Übertragungsgprotokolle verwendet werden. Erfindungsgemäß führt das Verfahren dazu, daß alle Terminals 21-28, die mit einer Zentrale 10 assoziiert sind, alle Broadcast-Meldungen bzw. Multicast-Meldungen erhalten, ohne daß ein einzelnes Terminal diese Meldungen mehrmals erhält.

Die hier beschrieben Broadcast-Meldungen bzw. Mulitcast-Meldungen dürfen nicht mit der Broadcast-Phase 110 in einem MAC-Rahmen 91-97 verwechselt werden. Broadcast-Nachrichten in Datennetzen sind Nachrichten, die nicht an ein bestimmtes Terminal 21-28 gerichtet sind, sondern an alle Terminals 21-28, die diese Meldung empfangen können, beispielsweise alle innerhalb eines Subnetzes oder innerhalb einer Funkzelle. Diese Nachrichten werden im Empfänger an eine Schicht oberhalb der MAC-Schicht gegeben. Sie werden verwendet, wenn zum Beispiel ein Terminal die IEEE-MAC-Adresse eines Terminal mit einer bestimmten Adresse auf einer höheren Ebenen erfahren möchte, beispielsweise zur IP-Adresse. Solche Broadcast-Meldungen erfordern im allgemeinen, daß ein, mehrere oder alle Terminals, die die Broadcast-Meldung hören, eine Antwort an den Sender, daß heißt in der Regel die Zentrale 10, schicken. Sie sind für die Funktion eines LANS (Local Area Network) essentiell wichtig.

Multicast-Meldungen sind Meldungen, die von einem Sender lediglich an eine bestimmte Untergruppe aller erreichbaren Terminals 21-28 versendet werden müssen. Im Unterschied zu Broadcast-Meldungen muß dem Austausch von Multicast-Meldungen eine Vereinbarungsphase vorangehen, während der die Zugehörigkeit von Terminals zu einer Multicast-Gruppe verhandelt oder vereinbart wird. Es ist außerdem möglich, daß ein Terminal sich einer Multicast-Gruppe nachträglich anschließt.

Die Broadcast-Phase im MAC-Rahmen ist im Gegensatz dazu vorwiegend zur Regelung des Datenaustauschs auf MAC-Ebene gedacht. Diese Meldungen werden innerhalb der MAC-Schicht terminiert, daß heißt sie werden dort ausgewertet und nichts weiter nach oben, in eine höhere Schicht gegeben. Es ist aber auch sinnvoll, Broadcast-Meldungen von höheren Schichten des OSI-Modells in der Broadcast-Phase des MAC-Protokolls zu versenden.

In Figur 3 ist ein Ausführungsbeispiel eines Adressierungsschemas für das erfindungsgemäße Verfahren dargestellt. Das Verfahren verwendet die Einführung von Multicast-Gruppen, um Broadcast-Meldungen zu verschicken. Dazu ordnet die Zentrale ein Terminal, das sich in einen Stromsparmodus begibt, einer oder mehreren Multicast-Gruppen zu und teilt dem Terminal die Zugehörigkeit zu dieser einen oder zu diesen mehreren Gruppen mit. Falls eine Broadcast-Meldung zu verschicken ist, schickt die Zentrale diese Nachricht an alle einzelnen, solchermaßen gebildeten Multicast-Gruppen und stellt somit sicher, daß jedes Terminal die Nachricht möglichst schnell und genau einmal erhält.

Das Verfahren ist sowohl für die Versendung von Broadcast-Meldungen als auch für die Versendung von Multicast-Meldungen durchführbar.

Für den Versand von Broadcast-Nachrichten werden hier Multicast-Gruppen verwendet, die sich allerdings auf genau eine Funkzelle beziehen. Herkömmliche Multicast-Gruppen können über Funkzellen hinweg bestehen und beispielsweise auf IP-oder auf Ethernet-Ebene definiert sein.

Terminals, die zur gleichen Zeit aufwachen, werden für Broadcast-Zwecke in Multicast-Gruppen zusammengefaßt, die im folgenden zur Unterscheidung als B-Multicast-Gruppen oder als Broadcast-Multicast-Gruppen bezeichnet werden. Nachrichten, die an eine B-Multicast-Gruppe versendet werden, müssen nur einmal versendet werden, um von allen Mitgliedern der B-Multicast-Gruppe empfangen zu werden. Daher ist es wichtig, daß nur Terminals, die im Schlafmodus sind und immer gleichzeitig empfangsbereit sind, einer B-Multicast-Gruppe zugeordnet sind. Dabei ist darauf zu achten, das jedes Terminal nur genau einer B-Multicast-Gruppe angehört.

Die Broadcast-Meldungen werden über eine bestimmte Nutzverbindungskennung (NVK) als Broadcast-Nachricht gekennzeichnet. Dazu wird eine bestimmte Kombination aus der MAC-Indentifizierung (MAC-ID) und Verbindungskennung reserviert, die allen Terminals einer B-Multicast-Gruppe und der Zentrale 10 bekannt ist. Die B-Multicast-Gruppen werden innerhalb der Zentrale 10 verwaltet und ebenfalls mit einer bestimmten NVK gekennzeichnet. Die Vergabe der NVK für Multicast-Gruppen erfolgt durch die Zentrale, die auch die Zuordnung von Terminals zu diesen Gruppen durchführt. Damit wissen sowohl die Zentrale 10 als auch die Terminals 21 bis 28, welche NVKs für Broadcast-Zwecke reserviert sind. Die Zuordnung eines Terminals zu einer B-Multicast-Gruppe erfolgt, indem die Zentrale 10 dem Terminal einem der B-Multicast-Gruppe spezifischen Parameter "NVK der B-Multicast-Gruppe" mitteilt. Dieser Parameter wird im folgenden auch als Kennung der B-Multicast-Gruppe bezeichnet. Diese Kennung wird beim Nachrichtenaustausch, der zum Übergang eines Terminals in den Schlafmodus stattfindet, übergeben, wobei die Zentrale eine solche Kennung in ihrer Antwort auf eine Schlafmodusanfrage dem Endgerät sendet.

Beim Versand einer Multicast-Meldung ist nicht jedes Terminal in einer Funkzelle gleichermaßen betroffen. Es kann sein, daß keines, eines, mehrere oder alle Terminals einer bestimmten Multicast-Gruppe angehören. Die Zentrale 10 muß auch hier sicherstellen, daß jedes betroffene Terminal die Nachricht genau ein einziges Mal erhält. Zur korrekten Übermittlung von Multicast-Meldungen an die betreffenden Endgeräte wird erfindungsgemäß exakt das gleiche Verfahren durchgeführt, das auch bei der Versendung von Broadcast-Meldungen zur Anwendung kommt. Es werden also innerhalb der betreffenden Multicast-Gruppe Endgerätegruppen 31-33 gebildet, die im folgenden auch als M-Multicast-Gruppen bzw. als Multicast-Multicast-Gruppen bezeichnet werden. Der einzige Unterschied betrifft die Menge der betroffenen Endgeräte. Im Falle einer Multicast-Meldung sind sämtliche Endgeräte im Einzugsbereich einer Zentrale von der Broadcast-Meldung betroffen. Bei einer Multicast-Meldung sind in der Regel lediglich ein Teil der Endgeräte einer Funkzelle 5 betroffen, und zwar diejenigen, die der betreffenden Multicast-Gruppe zugehören. In jedem Fall wird aber für die Menge der Endgeräte, die von einer Meldung betroffen sind, exakt das gleiche Verfahren durchgeführt. Daher wird im folgenden unterschiedslos von Meldungen, Broadcast-Meldungen, Multicast-Meldungen oder Broadcast-Multicast-Meldungen gesprochen.

Das Aussenden von Meldungen durch die Zentrale erfolgt nach folgenden Regeln:
Wenn die Zentrale 10 eine Broadcast-Nachricht empfängt die an alle oder einen Teil der Terminals 21-28 in der Funkzelle 5 zu versenden ist, speichert sie diese Nachricht ab.
- Sie versendet diese Nachricht in einem der folgenden MAC-Rahmen 91-97 als Broadcast-Nachricht. Hierbei weiß sie genau, welche Terminals empfangsbereit sind. Diejenigen Terminals 21 bis 28, die die Nachricht als Broadcast-Nachricht empfangen, können entweder aktiv sein oder einer sogenannten B-Multicast-Gruppe 31-33 angehören, die in diesem MAC-Rahmen 91-97 empfangsbereit ist. Eine B-Multicast-Gruppe oder auch Broadcast-Multicast-Gruppe 31-33 genannt, ist eine Endgerätegruppe 31-33, deren Endgeräte im selben MAC-Rahmen 91-97 empfangsbereit sind. Die Bezeichnung als B-Multicast-Gruppe 31-33 bzw. Broadcast-Multicast-Gruppe 31-33 ergibt sich daraus, daß eine solche Endgerätegruppe 31-33 für die Übermittlung einer Broadcast-Meldung zusammengefaßt wurde, jedoch so behandelt wird wie eine Gruppe von Endgeräten, die einer Multicast-Gruppe 31-33 angehören. Die Zentrale 10 nimmt an, daß die B-Multicast-Gruppe 31-33, die in diesem MAC-Rahmen 91-97 empfangsbereit ist, die Nachricht empfangen hat.
- Die Zentrale sendet sie Broadcast-Meldung an die übrigen B-Multicast-Gruppen 31-33 in den MAC-Rahmen 91-97, in denen diese Gruppen empfangsbereit sind. Dies geschieht solange, bis alle B-Multicast-Gruppen 31-33 mit mehr als einem Terminal 21-28 die Broadcast-Nachrichten empfangen haben.
- Einzelne Terminals, die nicht einer B-Multicast-Gruppe von Endgeräten angehören, weil beispielsweise ihr Schlafintervallparameter zu groß gewählt ist um eine effektive Informationsübertragung sicherzustellen werden entweder so behandelt, als seien sie eine eigene B-Multicast-Gruppe mit einem einzigen Endgerät oder aber solchen Endgeräten wird die zu übertragende Meldung individuell, das heißt endgerätespezifisch, übermittelt.

Die Terminals 21-28 verhalten sich nach folgenden Regeln:
- Alle aktiven Terminals und diejenigen, die aufgrund ihres Schlafintervalls in demselben MAC-Rahmen 91-97 empfangsbereit sind, in dem eine zu übertragende Meldung bei der Zentrale 10 eingegangen ist, empfangen entweder eine Broadcast-Meldung oder eine Broadcast-Multicast-Meldung.
- Wenn ein Terminal empfangsbereit ist und als Meldung eine Broadcast-Meldung erkennt, wird diese Meldung durch das Terminal empfangen.
- Wenn das Terminal keine Broadcast-Meldung, aber eine B-Multicast-Meldung empfängt, und das Terminal dieser B-Multicast-Gruppe angehört, empfängt es die B-Multicast-Meldung. Andernfalls empfängt es keine Broadcast-Nachricht.

Das in Figur 3 dargestellt erste Ausführungsbeispiel orientiert sich an der Situation in Figur 1, und umfaßt exemplarisch 8 Terminals 21 bis 28, die sich in der gemeinsamen Funkzelle 5 befinden. Die waagerechte Achse des Diagramms in Figur 3 repräsentiert dabei den zeitlichen Verlauf der Kommunikation zwischen der Zentrale 10 und den Terminals 21 bis 28. Auf der senkrechten Achse sind die Terminals 21 bis 28 aufgeführt. Von den acht Terminals 21 bis 28 befinden sich die ersten sieben Terminals 21 bis 27 im Schlafmodus und eines, nämlich das achte Terminal 28, im Aktivmodus. Die Zentrale 10 hat die sieben schlafenden Terminals 21 bis 27 in drei B-Multicast-Gruppen 31-33 aufgeteilt. Das erste Terminal 21 und das zweite Terminal 22 bilden gemeinsam die erste Endgerätegruppe 31. Die ersten beiden Terminals 21,22 sind dabei in jedem fünften MAC-Rahmen 91-97 empfangsbereit. Das dritte bis fünfte Terminal 23 bis 25 bilden die zweite Endgerätegruppe 32. Die Endgeräte der zweiten Endgerätegruppe 32 sind in jedem dritten MAC-Rahmen 91-97 bereit, Informationen von der Zentral zu empfangen. Die dritte Endgerätegruppe 33 wird von dem sechsten Endgerät und dem siebten Endgerät 27 gebildet. Das sechste Endgerät 26 und das siebte Endgerät 27 sind in jedem zweiten MAC-Rahmen 91-97 bereit. Das aktive achte Terminal 29 kann in jedem Rahmen 91-97 Nachrichten empfangen. Die Empfangsbereitschaft eines Terminals in einem MAC-Rahmen 91 bis 97 wird durch ein Kreuz beziehungsweise einen Haken im Schnittpunkt der dem jeweiligen Endgerät bzw. dem jeweiligen MAC-Rahmen zugehörigen Achsen im Diagramm bezeichnet. Ein Kreuz bedeutet dabei die prinzipielle Empfangsbereitschaft eines Terminals 21 bis 29 und ein Haken zeigt sowohl die prinzipielle Empfangsbereitschaft als auch den tatsächlichen Empfang einer Meldung an, die im ersten Ausführungsbeispiel im dritten MAC-Rahmen 93 bei der Zentrale eingegangen ist, was durch eine erste Linie 80 im dritten MAC-Rahmen 93 angedeutet ist. Die eingegangene Meldung ist als Broadcast-Meldung an alle Terminals adressiert. Die Broadcast-Meldung kann aber nur von dem aktiven achten Terminal 29 und der im dritten MAC-Rahmen 93 empfangsbereiten Endgeräte 26,27 der dritten Endgerätegruppe 33 empfangen werden. Daher ist für den dritten MAC-Rahmen 93 auf der Höhe des sechsten, siebten und achten Endgeräts ein Haken für den erfolgreichen Empfang der zu übertragenden Meldung-im Diagramm der Figur 3 dargestellt. Die Zentrale 10 nimmt nun an, daß das achte Endgerät 28 und die dritte Endgerätegruppe 33 die Broadcast-Nachricht erhalten haben. Der nächste mögliche Zeitpunkt, zu dem weitere Endgeräte 21-28 erreicht werden können, ist der vierte MAC-Rahmen 94. In diesem MAC-Rahmen ist die zweite Endgerätegruppe 32 bereit, Meldungen zu empfangen. Deshalb sendet die Zentrale 10 in dem vierten MAC-Rahmen 94 eine B-Multicast-Meldung 82 an die zweite Endgerätegruppe 32. Diese Nachricht ist ausschließlich an die Mitglieder dieser Gruppe adressiert, was durch eine Linie 82 im vierten MAC-Rahmen 94 angedeutet ist, die für alle Endgeräte 21-28 außer dem dritten, vierten und fünften Endgerät 23 bis 25 gestrichelt ausgeführt ist. Das gleiche gilt für eine dritte Linie 84 und die erste Endgerätegruppe 31 im sechsten MAC-Rahmen 96. Im fünften MAC-Rahmen 95 sind lediglich Terminals empfangsbereit, die die Nachricht bereits vorher erhalten haben. Deshalb findet hier keine Übertragung statt. Mit dem sechsten MAC-Rahmen 96 haben alle Terminals 21 bis 28 die Nachricht erhalten, das heißt die Broadcast-Nachricht ist vollständig übertragen.

In Figur 4 ist ein zweites Ausführungsbeispiel des erfindungsgemäßen Verfahrens dargestellt. Das zweite Ausführungsbeispiel entspricht einem Extremfall des ersten Ausführungsbeispiels. Im zweiten Ausführungsbeispiel stellt die Zentrale 10 durch entsprechende Zuordnung des Schlafintervallparameters und des Offsetparameters an die-Endgeräte sicher, daß alle Endgeräte 21-28 während eines gemeinsamen MAC-Rahmens empfangsbereit sind. Die Zentrale 10 sendet in genau diesem MAC-Rahmen die zu übermittelnde Meldung. In Figur 4 ist ein Beispiel für ein solches Verhalten dargestellt. Das Schlafintervall des ersten und des zweiten Endgerätes 21, 22 beträgt 6 MAC-Rahmen, das Schlafintervall des dritten, vierten und fünften Endgerätes 23 bis 25 entspricht 3 MAC-Rahmen, das Schlafintervall des sechsten und des siebten Endgerätes 26,27 entspricht 2 MAC-Rahmen und das achte Endgerät 28 ist aktiv, ist somit also in jedem MAC-Rahmen erreichbar. Weiterhin sei angenommen, daß im ersten MAC-Rahmen 91 alle Endgeräte 21 bis 28 empfangsbereit sind und daß im dritten MAC-Rahmen 93, dargestellt durch die erste Linie 80, eine Broadcast-Nachricht bei der Zentrale 10 eintrifft. Der nächste MAC-Rahmen nach dem dritten MAC-Rahmen 93, während dem alle Endgeräte 21 bis 28 empfangsbereit sind, ist der siebte MAC-Rahmen 97. In diesem wird die Broadcast-Nachricht an alle Endgeräte 21 bis 28 gleichzeitig verschickt. Somit entfällt die Notwendigkeit, die Endgeräte in Endgerätegruppen einzuteilen, denn es gibt sozusagen lediglich eine Gruppe, weil alle Terminals gemeinsam aufwachen bzw. zum Empfang bereit sind. Die Zentrale 10 speichert die Broadcast-Meldung im Beispiel in der Zeit zwischen dem dritten MAC-Rahmen 93 und dem siebten MAC-Rahmen 97 zwischen und verschickt sie dann, wenn alle Terminals wach sind. Der Vorteil dieses Verfahrens ist, das die Broadcast-Meldung nur einmal versendet wird und alle Terminals die Broadcast-Meldung gleichzeitig empfangen. Dadurch wird der Verbrauch von Übertragungsressourcen minimiert. Außerdem fällt die Definition von B-Multicast-Gruppen und die Zuordnung der Terminals 21 bis 28 dazu weg. Der wesentliche Nachteil ist, daß bei diesem Verfahren insbesondere im Fall sehr langer Schlafintervalle, beispielsweise in der Größenordnung von mehreren Sekunden für einzelne Terminals, die Broadcast - Meldung erst sehr spät bei den Terminals eintrifft. Dies kann zur erhöhten Wartezeiten der Gegenstellen im Netz und in einigen Fällen auch zum Auslaufen von Zeitgebern führen, was eine erneute Versendung der Broadcast-Meldung zur Folge haben kann.

Im anderen, nicht dargestellten Extremfall des ersten Ausführungsbeispiels versendet die Zentrale jede Broadcast-Nachricht einzeln an jedes Terminal 21 bis 28. Der Vorteil dieses Verfahrens ist, daß die Zentrale 10 jedes Terminal 21 bis 28 im Hinblick auf Broadcasts individuell behandeln kann und die Definition von B-Multicast-Gruppen wegfällt. Allerdings ist von Nachteil, daß die Zentrale 10 mehr Verwaltungsaufwand für die jeweils individuell zu behandelnden Endgeräte 21 bis 28 hat und daß mehr Übertragungskapazität benötigt wird, da die Broadcast-Nachricht für jedes Terminal individuell verschickt werden muß.

Das erste Ausführungsbeispiel des erfindungsgemäßen Verfahrens stellt demgegenüber einen Kompromiß zwischen den beiden beschriebenen extremen Ausführungsformen des erfindungsgemäßen Verfahrens dar. Beim ersten Ausführungsbeispiel ist dabei wichtig, daß die Zentrale 10 die Terminals 21 bis 28 maximal gruppiert, das heißt sie sorgt dafür, daß möglichst viele Terminals 21 bis 28 gleichzeitig in einem bestimmten MAC-Rahmen 91 bis 97 empfangsbereit sind. Dadurch ist ein tragbarer Kompromiß zwischen optimalen, das heißt möglichst langen Schlafzeiten zumindest für einige der Terminals 21 bis 28 und einer trotzdem großen Anzahl von zu Endgerätegruppen 31 bis 33 zusammengefaßten Terminals erreichbar, was zu einer geringeren Beanspruchung der Übertragungsressourcen des Telekommunikationssystems führt, weil-sämtliche Endgeräte einer Endgerätegruppen die zu übermittelnde Meldung gleichzeitig erhalten.

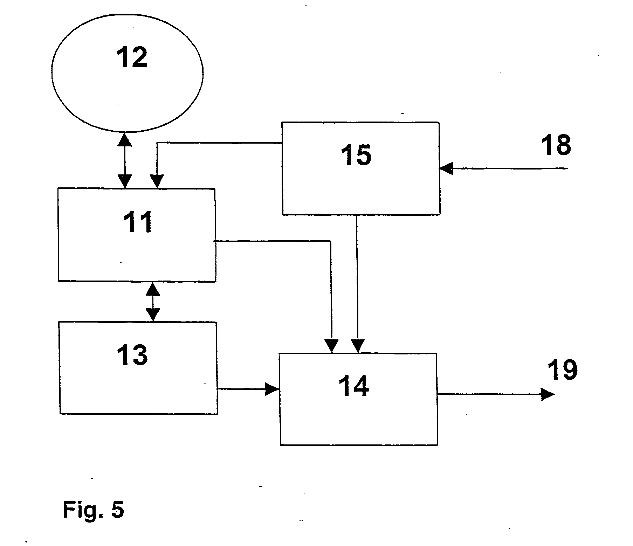

In Figur 5 ist ein Blockschaltbild des Teils einer Zentrale 10 dargestellt, der für das erfindungsgemäße Verfahren relevant ist. Die erfindungsgemäße Zentrale 10 umfaßt eine Vielfach-Nachrichtensteuerung 11, die solche Nachrichten, die an mehrere, der Zentrale 10 zugeordnete Endgerät 21 bis 28 zu übertragen sind, behandelt. Weiterhin umfaßt die Zentrale 10 einen Meldungsspeicher 12 und eine Steuerung 13 zur Durchführung eines Stromsparbetriebs der Endgeräte 21 bis 28. Hierbei ist der Meldungspeicher 12 und die Steuerung 13 jeweils mit der Vielfachnachrichten-Steuerung verbunden. Weiterhin umfaßt die erfindungsgemäße Zentrale 10 eine MAC-Steuerung 14, die die Zusammenstellung von Nachrichten und Meldungen gemäß dem Übertragungsprotokoll, beispielsweise dem MAC-Protokoll, sicherstellt. Sowohl die Vielfachnachrichten-Steuerung 11 als auch die Steuerung 13 sind mit der MAC-Steuerung 14 verbunden. In einer besonders vorteilhaften Ausführungsform umfaßt die erfindungsgemäße Zentrale 10 darüber hinaus einen Meldungsselektierer 15, der solche Meldungen, die an mehrere, der Zentrale 10 zugeordnete Endgeräte 21 bis 28 zu übertragen sind, von solchen Meldungen trennt, die individuell an ein einzelnes der Zentrale 10 zugeordnetes Endgerät 21-28 zu übertragen sind. Der Nachrichtenselektierer 15 ist mit der Vielfachnachrichten-Steuerung 11 und mit der MAC-Steuerung 14 verbunden. Nachrichten oder Meldungen 18, die vom Telekommunikationsnetz kommen, werden an den Nachrichtenselektierer 15 gegeben. Dieser leitet Broadcast-und Multicast-Meldungen werden an die Vielfachnachrichten-Steuerung 11 weiter. Alle anderen Nachrichten erhält die MAC-Steuerung 14 direkt. Die Steuerung 13 zur Durchführung eines Stromsparbetriebs der Endgeräte beeinflußt die Vielfachnachrichten-Steuerung 11 und die MAC-Steuerung 14. Die Steuerung 13 zur Durchführung eines Stromsparbetriebs 21 bis 28 ist in Zusammenarbeit mit der vielfachnachrichten-Steuerung dafür zuständig, die Endgeräte 21 bis 28 in Broadcast-Multicast-Gruppen bzw. in Multicast-Multicast-Gruppen einzuteilen und dies den Terminals 21 bis 28 beim Nachrichtenaustausch, der zum Übergang eines Terminals 21 bis 28 in dem Schlafmodus führt, mitzuteilen. Wenn eine Broadcast-Nachricht oder eine Multicast-Nachricht eintrifft, wird diese an die Vielfachnachrichten-Steuerung 11 gegeben, die diese Nachricht bei Bedarf in den Meldungsspeicher 12 ablegt. Die Vielfachnachrichten-Steuerung 11 erhält von der Steuerung 13 die Information darüber, wann welche Terminals 21 bis 28 bzw. welche Broadcast-Multicast-Gruppen 31-33 und Multicast-Multicast-Gruppen 31-33 empfangsbereit sind, und übergibt die entsprechenden Meldungen zum richtigen Zeitpunkt entsprechend den oben beschriebenen Verfahren gemäß dem ersten beziehungsweise dem zweiten Ausführungsbeispiel an die MAC-Steuerung 14, die für die Aussendung der Meldungen sorgt. Meldungen, die von der MAC Steuerung 14 so aufbereitet sind, daß sie einem nicht dargestellten Sender der Zentrale 10 zugeleitet werden können, sind mit 19 bezeichnet. Diese Realisierung kann auch für die alternativen Extremlösungen, die oben beschrieben wurden, eingesetzt werden. Bei allen beschriebenen Verfahren muß die Vielfachnachrichten-Steuerung Informationen von der Steuerung 13 haben, wann sie welche Nachricht günstigerweise aussendet, um sicherzustellen, daß zum einen alle Endgeräte, die eine Vielfachnachricht erhalten sollen, diese auch erhalten und daß zum anderen kein Endgerät eine solche Vielfachnachricht mehrfach erhält.

Erfindungsgemäß können auch andere Übertragungsmedien außer Funk zum Einsatz kommen. Wesentlich dabei ist, daß das MAC-Protokoll und das Verfahren zum Stromsparen ähnlich sind wie oben beschrieben. Dies setzt voraus, daß Terminals 21-28 und Zentrale 10 auf ein gemeinsam genutztes Medium zugreifen, wobei der Zugriff zentral durch die Zentrale 10 gesteuert wird. Mögliche Netze sind daher auch passive optische Netze und hybride Glasfaserkoaxial-Netze.

Weiterhin muß die Zentrale nicht notwendigerweise an ein dahinterliegendes Telekommunikationsnetz angeschlossen sein. In diesem Fall können die Terminals nur untereinander kommunizieren. Auch hier ist die Verwendung von Broadcast-und Multicast-Nachrichten üblich.
Im oben beschriebenen Verfahren wird sämtliche Kommunikation über die Zentrale geführt, das heißt, auch wenn zwei Terminals innerhalb einer Funkzelle miteinander kommunizieren, wird die Nachricht erst an die Zentrale gesendet, die sie dann an den Adressaten weiterschickt. Es ist aber auch möglich, daß Terminals direkt miteinander kommunizieren, wobei die Zentrale die Kommunikation weiterhin zentral koordiniert. Auch für diesen Fall soll das beschriebene Verfahren eingesetzt werden. Dazu versenden Terminals 21-28 Broadcast- und Multicast-Nachrichten niemals direkt an ein anderes Terminal 21-28, sondern nehmen immer den Weg über die Zentrale. Die Zentrale vervielfacht die Nachricht und versendet sie gemäß dem beschriebenen Verfahren weiter an die Terminals 21-28 in der Funkzelle und ggf. weiter in die Netzwerkumgebung.

## Patentansprüche

1. Verfahren zur Übertragung von Mitteilungen an Endgeräte (21-28) in einem, insbesondere drahtlosen, Telekommunikationssystem mit einer Zentrale (10), die mittels eines, insbesondere mit Hilfe von MAC-Rahmen, (91-97) zeitlich rahmenstrukturierten Protokolls zum einen Mitteilungen für Endgeräte (21-28) in einem ersten Teilbereich (110,111) innerhalb der Rahmen (91-97) aussendet und zum anderen Mitteilungen von Endgeräten (21-28) in einem zweiten Teilbereich (112,113) innerhalb der Rahmen (91-97) empfängt, wobei die Endgeräte (21-28) die Mitteilungen der Zentrale (10) während der Dauer eines einzelnen Rahmens (91-97) oder während der Dauer mehrerer aufeinanderfolgender Rahmen (91-97) ignorieren, wobei zur Übertragung einer an eine Mehrzahl von Endgeräten (21-28) im ersten Teilbereich (110, 111)der Rahmen zu übertragende Mitteilung folgende Schritte durchgeführt werden:
- es wird von der Zentrale (10) eine Gruppe von Endgeräten zu wenigstens einer Endgerätegruppe (31-33) zusammengefasst, wobei die Anzahl von Endgerätegruppen (31-33) aus der Mehrzahl der Endgeräte (21-28) gebildet ist, wobei jedes Endgerät (21-28) zu mindestens einer Endgerätegruppe (31-33) gehört, wobei alle Endgeräte (21-28) einer Endgerätegruppe (31-33) während des gleichen, vorzugsweise periodisch wiederkehrenden, Rahmens (91-97) in einer Stromsparphase bereit sind, Mitteilungen der Zentrale (10) in Form von Broadcast-Meldungen oder Broadcast-Multicast-Meldungen in einer Funkzelle zu empfangen und wobei die Endgeräte (21-28) unterschiedlicher Endgerätegruppen (31-33) vorzugsweise während unterschiedlicher Rahmen (91-97) bereit sind, Mitteilungen zu empfangen,
- die zu übertragende Mitteilung wird für jede der wenigstens einen Endgerätegruppe (31-33) während eines der Rahmen (91-97) an die Endgeräte (21-28) der Endgerätegruppe (31-33) übertragen,
- die Anzahl der zu bildenden Endgerätegruppen (31-33) wird in Abhängigkeit der Übertragungs- und verwaltungressourcen des Telekommunikationssystems und der Zentrale (10) und/oder der zu erwartenden Übertragungsverzögerung gewählt.

2. Verfahren nach Anspruch 1, **dadurch gekennzeichnet, dass** jede Endgerätegruppe (31-33) genau ein Endgerät (21-28) umfasst.

3. Verfahren nach Anspruch 1, **dadurch gekennzeichnet, dass** den Endgeräten (21-28) einer Endgerätegruppe (31-33) von der Zentrale (10) Parameter, vorzugsweise ein Schlafintervallparameter und ein Offsetparameter, übergeben werden, so dass alle Endgeräte (21-28) einer Endgerätegruppe (31-33) während des gleichen, vorzugsweise periodisch wiederkehrenden, Rahmens (91-97) bereit sind, Mitteilungen der Zentrale (10) zu empfangen.

4. Verfahren nach Anspruch 1 oder 3, **dadurch gekennzeichnet, dass** die Mehrzahl der Endgeräten (21-28) zu lediglich einer einzigen Endgerätegruppe (31-33) zusammengefaßt werden und dass die zu übertragende Mitteilung somit an die Mehrzahl der Endgeräte (21-28) während eines einzigen möglichen, vorzugsweise des ersten möglichen, der Rahmen (91-97) übertragen werden.

5. Verfahren nach einem der vorhergehenden Ansprüche, **dadurch gekennzeichnet, dass** die Zuordnung eines Endgerätes (21-28) zu einer bestimmten Endgerätegruppe (31-33) dem betreffenden Endgerät (21-28) von der Zentrale (10) durch die Übergabe einer, insbesondere der Endgerätegruppe (21-28) spezifisch zugeordneten, Kennung mitgeteilt wird.

6. Verfahren nach einem der vorhergehenden Ansprüche, **dadurch gekennzeichnet, dass** die zu übertragende Mitteilung von der Zentrale (10) in einem Meldungsspeicher (12) gespeichert wird.

7. Verfahren nach einem der Ansprüche 1, 2, 5 oder 6, **dadurch gekennzeichnet, dass** eine Endgerätegruppe (31-33) lediglich ein einziges Endgerät (21-28) umfasst, wobei die zu übertragende Mitteilung dem einzigen Endgerät (21-28) der einen Endgerätegruppe (31-33) mittels einer Einzelmeldung übertragen wird.

8. Verfahren nach einem der vorhergehenden Ansprüche, **dadurch gekennzeichnet, dass** die zu übertragende Meldung als Broadcast-Meldung oder als Broadcast-Multicast-Meldung behandelt wird, wobei die Mehrzahl von Endgeräten (21-28) von allen der Zentrale (10), insbesondere in einer Funkzelle (5) eines zellularen Funknetzes, zugeordneten Endgeräte (21-28) gebildet wird.

9. Verfahren nach einem der vorhergehenden Ansprüche, **dadurch gekennzeichnet, dass** die zu übertragende Meldung als Multicast-Meldung oder als Multicast-Multicast-Meldung, die an die Endgeräte (21-28) einer Multicast-Gruppe übertragen werden soll, behandelt wird, wobei die Mehrzahl von Endgeräten (21-28) von allen der Zentrale (10), insbesondere in einer Funkzelle (5) eines zellularen Funknetzes, zugeordneten Mitgliedern der Multicastgruppe gebildet wird.

10. Zentrale (10) mit Mitteln zur Ausführung aller Schritte nach einem der vorhergehenden Ansprüche zur Übertragung von Mitteilungen an Endgeräte (21-28) in einem, insbesondere drahtlosen, Telekommunikationssystem, **dadurch gekennzeichnet, dass** die Zentrale (10) eine Vielfachnachrichtensteuerung (11) umfasst, die solche Nachrichten, die an mehrere, der Vorrichtung zugeordnete Endgeräte (21-28) zu übertragen sind, behandelt, dass die Zentrale (10) einen Meldungsspeicher (12) umfasst und dass die Zentrale (10) eine Steuerung (13) zur Durchführung eines Stromsparbetriebs der Endgeräte (21-28) umfasst.

11. Zentrale (10) nach Anspruchs 10, **dadurch gekennzeichnet, dass** die Zentrale (10) einen Meldungsselektierer (15) umfasst, der solche Meldungen, die an mehrere, der Zentrale (10) zugeordnete Endgeräte (21-28) zu übertragen sind, von solchen Meldungen trennt, die individuell an ein einzelnes der Zentrale (10) zugeordnetes Endgerät (21-28) zu übertragen sind.

12. Endgerät (21-28) mit Mitteln zur Ausführung aller Schritte nach einem der vorhergehenden Ansprüche, zur Kommunikation in einem, insbesondere drahtlosen, Telekommunikationssystem, **dadurch gekennzeichnet, dass** das Endgerät (21-28) Mittel umfasst, die Zuordnung des Endgerätes (21-28) zu einer Gruppe von Endgeräten (21-28), die zu einer Endgerätegruppe (31-33) zusammengefaßt ist, und die Zuordnung von Meldungen zu der Endgerätegruppe (31-33) des Endgerätes (21-28) mittels einer der Endgerätegruppe (31-33) spezifisch zugeordneten Kennung zu erkennen.

## Claims

1. Method for transmission of messages to terminals (21-28) in a telecommunications system, in particular a wire-free telecommunications system, with a control centre (10) which uses a protocol with a frame-structure in time, in particular with the aid of MAC frames (91-97), on the one hand to send messages for terminals (21-28) in a first subarea (110, 111) within the frames (91-97), and on the other hand to receive message from terminals (21-28) in a second subarea (112, 113) within the frames (91-97), with the terminals (21-28) ignoring the messages from the control centre (10) for the duration of a single frame (91-97) or for the duration of a plurality of successive frames (91-97), with the following steps being carried out for transmission of a message which is to be transmitted to a plurality of terminals (21-28) in the first subarea (110, 111) of the frames:
- the control centre (10) combines a group of terminals to form at least one terminal group (31-33), with the number of terminal groups (31-33) being formed from the plurality of terminals (21-28), with each terminal (21-28) belonging to at least one terminal group (31-33), with all the terminals (21-28) in a terminal group (31-33) being read during the same, preferably periodically recurring, frame (91-97) in a power-saving phase to receive message from the control centre (10) in the form of broadcast messages or broadcast-multicast messages in a radio cell, and with the terminals (21-28) in different terminal groups (31-33) preferably being ready to receive messages during different frames (91-97),
- the message to be transmitted is transmitted for each of the at least one terminal group (31-33) during one of the frames (91-97) to the terminals (21-28) in the terminal group (31-33),
- the number of terminal groups (31-33) to be formed is chosen as a function of the transmission resources and management resources in the telecommunications system and the control centre (10), and/or as a function of the transmission delay to be expected.

2. Method according to Claim 1, **characterized in that** each terminal group (31-33) comprises one, and only one, terminal (21-28).

3. Method according to Claim 1, **characterized in that** the control centre (10) transmits parameters, preferably a sleep interval parameter and an offset parameter, to the terminals (21-28) in a terminal group (31-33), such that all the terminals (21-28) in the terminal group (31-33) are ready to receive messages from the control centre (10) during the same, preferably periodically recurring, frame (91-97).

4. Method according to Claim 1 or 3, **characterized in that** the plurality of terminals (21-28) are combined to form just a single terminal group (31-33), and **in that** the message to be transmitted is therefore transmitted to the plurality of terminals (21-28) during a single possible, preferably the first possible, one of the frames (91-97).

5. Method according to one of the preceding claims, **characterized in that** the allocation of a terminal (21-28) to a specific terminal group (31-33) is signalled to the relevant terminal (21-28) from the control centre (10) by transmission of a tag, which is specifically allocated in particular to that terminal group (21-28).

6. Method according to one of the preceding claims, **characterized in that** the message to be transmitted from the control centre (10) is stored in a message store (12).

7. Method according to one of Claims 1, 2, 5 or 6, **characterized in that** a terminal group (31-33) comprises only a single terminal (21-28), with the message to be transmitted being transmitted to the single terminal (21-28) in the one terminal group (31-33) by means of a single message.

8. Method according to one of the preceding claims, **characterized in that** the message to be transmitted is treated as a broadcast message or as a broadcast-multicast message, with the plurality of terminals (21-28) being formed by all of the terminals (21-28) which are allocated to that control centre (10), in particular in a radio cell (5) in a cellular radio network.

9. Method according to one of the preceding claims, **characterized in that** the message to be transmitted is treated as a multicast message or as multicast-multicast message which is intended to be transmitted to the terminals (21-28) in a multicast group, with the plurality of terminals (21-28) being formed by all of the members of the multicast group which are allocated to that control centre (10), in particular in a radio cell (5) in a cellular radio network.

10. Control centre (10) having means for carrying out all the steps according to one of the preceding claims for transmission of messages to terminals (21-28) in a telecommunications system, in particular a wire-free telecommunications system, **characterized in that** the control centre (10) has a multiple message controller (11) which treats those messages which are to be transmitted to a plurality of terminals (21-28) associated with that apparatus such that the control centre (10) comprises a message store (12) and such that the control centre (10) comprises a controller (13) for carrying out a power-setting operation for the terminals (21-28).

11. Control centre (10) according to Claim 10, **characterized in that** the control centre (10) comprises a message selector (15) which separates those messages which are to be transmitted to a plurality of terminals (21-28) allocated to that control centre (10) from those messages which must be transmitted individually to a single terminal (21-28) allocated to the control centre (10).

12. Terminal (21-28) having means for carrying out all the steps according to one of the preceding claims, for communication in a telecommunications system, in particular a wire-free telecommunications system, **characterized in that** the terminal (21-28) has means to identify the allocation of the terminal (21-28) to a group of terminals (21-28) which are combined to form a terminal group (31-33), and to identify the allocation of messages to the terminal group (31-33) of the terminal (21-28) by means of a tag which is allocated specifically to that terminal group (31-33).

## Revendications

1. Procédé de transmission de messages vers des terminaux (21-28) dans un système de télécommunication, notamment sans fil, comprenant une centrale qui, à l'aide d'un protocole à structure de trames dans le temps, notamment de trames MAC (91-97), d'une part émet des messages vers des terminaux (21-28) dans une première plage partielle (110, 111) des trames (91-97) et d'autre part, reçoit des messages de terminaux (21-28) dans une seconde plage partielle (112, 113) des trames (91-97),
les terminaux (21-28) ignorant les messages de la centrale (10) pendant la durée d'une seule trame (91-97) ou pendant la durée de plusieurs trames successives (91-97),
pour transmettre un message à envoyer vers plusieurs terminaux (21-28) dans la première plage partielle (110, 111) des trames, on exécute les étapes suivantes :
- la centrale (10) assemble un groupe de terminaux en au moins un groupe de terminaux (31-33),
* le nombre des groupes de terminaux (31-33) étant formé de plusieurs terminaux (21-38),
* chaque terminal (21-28) appartient à au moins un groupe de terminaux (31-33),
* tous les terminaux (21-28) d'un groupe de terminaux (31-33) sont préparés en phase d'économie de courant pendant la même trame (91-97), de préférence de manière répétée périodiquement, pour recevoir des messages de la centrale (10) sous la forme de messages radio ou de messages radio (multipoint) dans une cellule radio et
* les terminaux (21-28) de différents groupes de terminaux (31-33) sont prêts à recevoir des messages, de préférence dans des trames différentes (91-97),
- le message à transmettre est transmis pour au moins un groupe de terminaux (31-33) pendant la trame (91-97) vers les terminaux (21-28) du groupe de terminaux (31-33),
- le nombre de groupes de terminaux (31-33) à former, est choisi en fonction des ressources de transmission et de gestion du système de télécommunication de la centrale (10) et/ou du retard de transmission prévisible.

2. Procédé selon la revendication 1,
**caractérisé en ce que**
chaque groupe de terminaux (31-33) comprend précisément un terminal (21-28).

3. Procédé selon la revendication 1,
**caractérisé en ce qu'**
on transmet aux terminaux (21-28), un groupe de terminaux (31-33) par la centrale (10), des paramètres, de préférence un paramètre d'intervalle de mise en sommeil et un paramètre de décalage de façon que tous les terminaux (21-28) d'un groupe de terminaux (31-33) soient prêts à recevoir des messages de la centrale (10) pendant la même trame (91-97) qui, de préférence, est répétée périodiquement.

4. Procédé selon la revendication 1 ou 3,
**caractérisé en ce qu'**
un grand nombre de terminaux (21-28) est regroupé seulement en un unique groupe de terminaux (31-33) et le message à transmettre est ainsi transmis à cet ensemble de terminaux (21-28) pendant une seule trame possible (91-97), de préférence la première trame possible.

5. Procédé selon l'une des revendications précédentes,
**caractérisé en ce que**
l'association d'un terminal (21-28) à un certain groupe de terminaux (31-33) est communiquée au terminal concerné (21-28) par la centrale (10) par la transmission d'une caractéristique, notamment associée de manière spécifique au groupe de terminaux (21-28).

6. Procédé selon l'une des revendications précédentes,
**caractérisé en ce que**
le message à transmettre par la centrale (10) est mémorisé dans une mémoire de messages (12).

7. Procédé selon l'une des revendications 1, 2, 5, ou 6,
**caractérisé en ce qu'**
un groupe de terminaux (31-33) comprend uniquement un seul terminal (21-28) et le message à transmettre vers l'unique terminal (21-28) du groupe de terminaux (31-33) est transmis sous la forme d'un message unique.

8. Procédé selon l'une des revendications précédentes,
**caractérisé en ce que**
le message à transmettre est un message radio ou un message radio multipoint et l'ensemble des terminaux (21-28) de tous les terminaux (21-28) associés à la centrale (10) est associé notamment à un point radio (5) d'un réseau radio cellulaire.

9. Procédé selon l'une des revendications précédentes,
**caractérisé en ce que**
le message à transmettre aux terminaux (21-28) d'un groupe multipoint est traité comme message multipoint ou message multipoint/multipoint, l'ensemble des terminaux (21-28) étant formé par tous les membres du groupe multipoint associés à la centrale (10), notamment à une cellule radio (5) d'un réseau radio cellulaire.

10. Centrale (10) comportant des moyens pour la mise en oeuvre de toutes les étapes de procédé selon l'une des revendications précédentes pour transmettre des messages vers des terminaux (21-28) dans un système de télécommunication, notamment sans fil,
**caractérisée en ce que**
la centrale (10) comprend une commande d'informations multiples (11) qui traite des informations à transmettre vers plusieurs terminaux (21-28) associés au dispositif,
la centrale (10) comprend une mémoire de messages (12) et
la centrale (10) comprend une commande (13) pour assurer le mode de fonctionnement avec économie de courant des terminaux (21-28).

11. Centrale (10) selon la revendication 10,
**caractérisée en ce que**
la centrale (10) comprend un sélecteur de message (15) qui sépare les messages à transmettre vers plusieurs terminaux (21-28) associés à la centrale et les messages à transmettre individuellement à un terminal (21-28) associé à la centrale (10).

12. Terminal (21-28) comportant des moyens pour mettre en oeuvre toutes les étapes de procédé selon l'une des revendications précédentes, pour communiquer dans un système de télécommunication, notamment sans fil,
**caractérisé en ce que**
le terminal (21-28) comprend des moyens qui regroupent l'association des terminaux (21-28) dans un groupe de terminaux (31-33) et l'association de messages vers le groupe de terminaux (31-33) des terminaux (21-28) à l'aide d'une caractéristique spécifique du groupe de terminaux (31-33).
